# EUROPÄISCHE PATENTSCHRIFT

(11) **EP 3 870 835 B1**
(45) Veröffentlichungstag und Bekanntmachung des Hinweises auf die Patenterteilung: **08.11.2023**
(21) Anmeldenummer: 19791247.0
(22) Anmeldetag: 22.10.2019
(51) Int. Cl.: F03D 1/06, B66C 1/10, F03D 13/10

(54) **VERFAHREN ZUR MONTAGE EINES WINDENERGIEANLAGEN-ROTORBLATTES**
METHOD FOR INSTALLING A WIND TURBINE ROTOR BLADE
PROCÉDÉ DE MONTAGE D'UNE PALE DE ROTOR D'INSTALLATION ÉOLIENNE

(30) Priorität: 26.10.2018 DE 102018126728
(43) Veröffentlichungstag der Anmeldung: 01.09.2021
(73) Patentinhaber: Wobben Properties GmbH, 26607 Aurich (DE)
(72) Erfinder: SPIETH, Falk, 26603 Aurich (DE)
(74) Vertreter: Eisenführ Speiser
(86) Internationale Anmeldenummer: PCT/EP2019/078688
(87) Internationale Veröffentlichungsnummer: WO 2020/083890

(56) Entgegenhaltungen:
- EP-A1- 3 351 790
- CN-B- 103 174 601
- DE-A1-102014 002 228
- US-A1- 2015 300 175

## Beschreibung

Die vorliegende Erfindung betrifft ein Verfahren zur Montage eines Windenergieanlagen-Rotorblattes sowie eine Halteeinheit zur Montage eines Windenergieanlagen-Rotorblattes.

Bei der Errichtung einer Windenergieanlage werden die Rotorblätter entweder einzeln oder zusammen mit dem aerodynamischen Rotor mittels eines Krans an einer Gondel der Windenergieanlage befestigt. Bei der Montage einzelner Rotorblätter wird das Rotorblatt mittels eines Kranes angehoben. Zur Sicherung des Rotorblattes während der Montage wird ein Halteseil an dem Rotorblatt befestigt. Nach Abschluss der Montage des Rotorblatts an einer Nabe der Windenergieanlage muss das Halteseil entfernt werden. Hierzu werden dann ein oder zwei Monteure zu dem Rotorblatt, beispielsweise mittels eines Mannkorbes, an dem Hauptkranhaken nach oben gezogen, um das Halteseil zu entfernen.

Alternativ dazu sind fernauslösbare Halteseile bekannt. Diese erfordern jedoch einen Eingriff in das Design des Rotorblattes, wodurch das Rotorblatt aufwendiger und teurer wird.

In der prioritätsbegründenden deutschen Patentanmeldung hat das Deutsche Patent- und Markenamt die folgenden Dokumente recherchiert: DE 10 2011 116 189 B3, DE 10 2014 002 228 A1, US 5 772 269 A, EP 1 925 583 A1 und CN 105 649 893 A.

Weiterer Stand der Technik ist aus EP3351790A1 bekannt.

Es ist eine Aufgabe der vorliegenden Erfindung eine Montage eines Windenergieanlagen-Rotorblattes zu vereinfachen. Insbesondere ist es Aufgabe der vorliegenden Erfindung eine Demontage eines Halteseils zu vereinfachen.

Diese Aufgabe wird durch ein Verfahren zur Montage eines Windenergieanlagen-Rotorblattes nach Anspruch 1 sowie durch eine Halteeinheit zur Montage eines Rotorblattes nach Anspruch 6 gelöst.

Somit wird ein Verfahren zur Montage eines Windenergieanlagen-Rotorblattes vorgesehen. Eine Halteeinheit wird lösbar außen an dem Rotorblatt ohne Eingriff in die Oberfläche des Rotorblattes befestigt. Ein Halteseil wird an der Halteeinheit befestigt. Das Rotorblatt wird an der Nabe der Windenergieanlage montiert, hierzu wird das Rotorblatt beispielsweise mittels eines Krans nach oben gezogen. Die Halteeinheit wird durch Pitchen des Rotorblattes gelöst.

Damit ist es möglich, das Halteseil von dem montierten Rotorblatt zu entfernen ohne dass dazu ein Monteur nach oben gezogen werden muss oder ohne dass hierzu eine fernauslösbare Entfernung des Halteseils erforderlich ist. Die Halteeinheit an der das Halteseil befestigt wird, wird lediglich durch Drehen bzw. Pitchen des Rotorblattes um die Längsachse des Rotorblattes gelöst.

Gemäß einem Aspekt der vorliegenden Erfindung weist die Halteeinheit mindestens einen Gurt auf, welcher mindestens einmal um das Rotorblatt gewickelt ist, um außen an dem Rotorblatt befestigt zu werden. An dem Gurt kann dann das Halteseil befestigt werden. Wenn die Montage des Rotorblattes erfolgt ist, dann muss lediglich das Rotorblatt gedreht werden, damit der Gurt, der um das Rotorblatt gewickelt ist, sich lösen bzw. entfernt werden kann.

Die Erfindung betrifft ebenfalls eine Halteeinheit zur Montage eines Rotorblattes. Die Halteeinheit weist einen Gurt, wie beispielsweise einen Flachbandgurt und eine Klemmeinheit zum Beispiel in Form einer Klemmleiste auf. Die Klemmleiste ist dazu geeignet an einer Hinterkante des Rotorblattes befestigt zu werden. Zur Montage des Rotorblattes wird der Gurt mindestens einmal um das Rotorblatt gewickelt und ein Ende wird mittels der Klemmleiste an einer Hinterkante des Rotorblattes befestigt.

Gemäß einem weiteren Aspekt der vorliegenden Erfindung weist die Halteeinheit einen Aufleger als Schutz der Oberfläche des Rotorblattes zwischen der Oberfläche des Rotorblattes und dem Gurt auf.

Gemäß einem weiteren Aspekt der vorliegenden Erfindung kann die Klemmeinheit als ein glasfaserverstärkten Kunststoff GFK-Haken oder -Leiste ausgestaltet sein.

Gemäß einem weiteren Aspekt der vorliegenden Erfindung weist der Gurt eine rutschhemmende Oberfläche auf.

Gemäß einem weiteren Aspekt der vorliegenden Erfindung ist ein Ende des Gurtes an der Klemmeinheit befestigt bzw. eingeklemmt und ein zweites Ende des Gurtes ist am Halteseil befestigt.

Gemäß einem weiteren Aspekt der vorliegenden Erfindung ist die Klemmeinheit über ein Sicherungsseil an einem Kran oder dem Halteseil befestigt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung und
- Fig. 2: zeigt eine schematische Darstellung eines Endes eines Rotorblattes gemäß einem Ausführungsbeispiel der Erfindung.

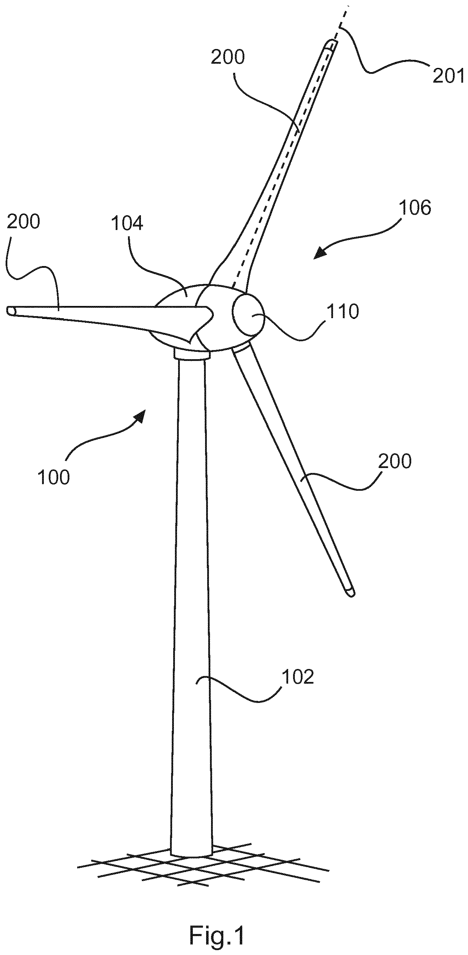

Fig. 1 zeigt eine schematische Darstellung einer Windenergieanlage gemäß der Erfindung. Fig. 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an. Die Rotorblätter 200 können entlang ihrer Längsachse 201 gedreht werden, d.h. der Pitch (Winkel) kann verändert werden.

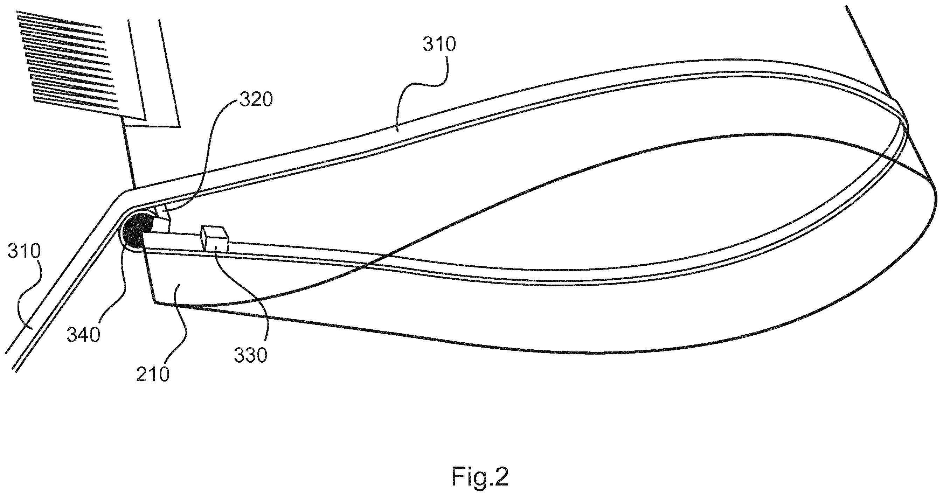

Fig. 2 zeigt eine schematische Darstellung eines Endes eines Rotorblattes gemäß einem Ausführungsbeispiel der Erfindung. In Fig. 2 ist insbesondere ein Rotorblatt 200 mit einer Rotorblatthinterkante 210 gezeigt, wobei eine Halteeinheit 300 vorgesehen ist. Die Halteeinheit 300 weist einen Gurt 310 (beispielsweise ein Flachgurt), eine Klemmleiste 320, welche an der Rotorblatthinterkante 210 befestigt ist, optional ein Auflager 330 und einen Endkantenschutz 340 auf. Der Gurt 310 weist ein erstes Ende 311 auf, welches mittels der Klemmleiste 320 eingeklemmt sein kann. Ein zweites Ende 312 des Gurtes 310 kann mit einem Halteseil gekoppelt sein.

Die Klemmleiste 320 kann als Klemmeinheit ausgestaltet sein und kann beispielsweise in Form von GFK-Haken ausgestaltet sein. Optional kann der Endkantenschutz integriert sein. Der Gurt 310 wird somit über die Hinterkante, entlang der Druckseite, in Richtung der Vorderkante des Rotorblattes und entlang der Saugseite wieder zurück zu der Hinterkante geführt. Damit ist der Gurt mindestens einmal um das Rotorblatt gewickelt. Alternativ dazu können der Gurt 310 auch mehrfach um das Rotorblatt gewickelt sein.

Gemäß einem Aspekt der vorliegenden Erfindung kann der Gurt auf seiner Innenseite eine rutschhemmende Oberfläche aufweisen.

Durch die Schwerkraft des Halteseiles und durch die Haltekräfte, welche auf das Halteseil ausgeübt wird (bei Einsatz einer elektrischen Winde, mindestens 200N) kann die Klemmeinheit permanent an die Hinterkante gedrückt werden, so dass das Halteseil formschlüssig am Rotorblatt befestigt ist.

Nach Abschluss der Montage des Rotorblattes kann die Halteeinheit 300 mit der Klemmeinheit 310 durch Drehen bzw. Pitchen des Rotorblattes gelöst werden.

Optional kann die Klemmeinheit über ein Sicherungsseil mit dem Kranhaken verbunden sein, um sicherzustellen, dass die Klemmeinheit nicht ungehindert nach unten fallen kann.

Optional kann eine externe bzw. modulare Steuereinheit vorgesehen sein, um das Pitchen der Rotorblätter zu ermöglichen, falls die Windenergieanlage noch nicht an das Energieversorgungsnetz angeschlossen ist.

Die erfindungsgemäße Halteeinheit ist vorteilhaft, weil der Gurt (insbesondere ein Flachgurt) durch das Umschlingen des Rotorblattes eine flächige Verteilung der Kräfte gewährleistet. Durch die Reibung des Gurtes an der Oberfläche des Rotorblattes wird ebenfalls die Klemmleiste wenig belastet.

## Patentansprüche

1. Verfahren zur Montage eines Windenergieanlagen-Rotorblattes (200), mit den Schritten:
lösbares Befestigen einer Halteeinheit (300) außen an dem Windenergieanlagen-Rotorblatt insbesondere ohne Eingriff in eine Oberfläche des Windenergieanlagen-Rotorblattes (200),
Befestigen eines Halteseiles an der Halteeinheit (300),
Montieren des Rotorblattes (200) an einer Nabe der Windenergieanlage (100), und
Lösen der Halteeinheit (300) durch Drehen des Windenergieanlagen-Rotorblattes (200) um eine Rotorblattlängsachse,
wobei die Halteeinheit (300) mindestens einen Gurt (310) aufweist, welcher mindestens einmal um das Windenergieanlagen-Rotorblatt (200) gewickelt ist, um die Halteeinheit (300) außen an dem Windenergieanlagen-Rotorblatt (200) zu befestigen, und eine Klemmeinheit (320) aufweist, welche dazu ausgestaltet ist, ein Ende des Gurtes (310) an einer Hinterkante (210) des Windenergieanlagen-Rotorblattes (200) zu befestigen.

2. Verfahren zur Montage eines Windenergieanlagen-Rotorblattes (200) nach Anspruch 1,
wobei die Halteeinheit (300) einen Hinterkantenschutz (340) aufweist, mittels welchem die Klemmeinheit (320) an der Hinterkante (210) des Rotorblattes (200) befestigbar ist,
wobei die Klemmeinheit (320) als ein Haken, insbesondere aus GFK, ausgestaltet ist.

3. Verfahren zur Montage eines Windenergieanlagen-Rotorblattes (200) nach Anspruch 2, wobei
die Halteeinheit (300) einen Aufleger als Schutz für die Oberfläche des Rotorblattes aufweist.

4. Verfahren zur Montage eines Windenergieanlagen-Rotorblattes (200) nach einem der Ansprüche 1 bis 3, wobei
der Gurt zumindest abschnittsweise eine rutschhemmende Oberfläche aufweist.

5. Verfahren zur Montage eines Windenergieanlagen-Rotorblattes (200) nach einem der Ansprüche 1 bis 4, wobei
der Gurt (310) ein erstes Ende (311) aufweist, welches mit der Klemmeinheit (320) einklemmbar ist und ein zweites Ende (312) aufweist, an welchem ein Halteseil (400) befestigbar ist.

6. Halteeinheit (300) zur Montage eines Windenergieanlagen-Rotorblattes (200), mit
mindestens einem Gurt (310), welcher um ein Windenergieanlagen-Rotorblatt (200) wickelbar ist,
einer Klemmeinheit (320), welche dazu ausgestaltet ist, ein Ende des Gurtes (310) an einer Hinterkante (210) des Windenergieanlagen-Rotorblattes (200) zu befestigen, und
einem Hinterkantenschutz (340), mittels welchem die Klemmeinheit (320) an der Hinterkante (210) des Rotorblattes (200) befestigbar ist,
wobei die Klemmeinheit (320) als ein Haken, insbesondere aus GFK, ausgestaltet ist.

7. Halteeinheit (300) nach Anspruch 6, ferner mit
einem Aufleger als Schutz für die Oberfläche des Rotorblattes.

8. Halteeinheit (300) nach einem der Ansprüche 6 bis 7, wobei
der Gurt zumindest abschnittsweise eine rutschhemmende Oberfläche aufweist.

9. Halteeinheit (300) nach einem der Ansprüche 6 bis 8, wobei
der Gurt (310) ein erstes Ende (311) aufweist, welches mit der Klemmeinheit (320) einklemmbar ist und ein zweites Ende (312) aufweist, an welchem ein Halteseil (400) befestigbar ist.

10. Halteeinheit (300) nach einem der Ansprüche 6 bis 9, wobei
die Klemmeinheit (320) über ein Sicherungsseil gegen ein Herunterfallen gesichert ist.

## Claims

1. A method of installing a wind turbine rotor blade (200) comprising the steps:
releasably fixing a holding unit (300) at the exterior to the wind turbine rotor blade, in particular without intervention in a surface of the wind turbine rotor blade (200),
fixing a holding cable to the holding unit (300),
installing the rotor blade (200) to a hub of the wind turbine (100), and
releasing the holding unit (300) by turning the wind turbine rotor blade (200) about a rotor blade longitudinal axis,
wherein the holding unit (300) has at least one strap (310) which is wound at least once around the wind turbine rotor blade (200) to fix the holding unit (300) at the exterior to the wind turbine rotor blade (200),
and a clamping unit (320) adapted to fix an end of the strap (310) to a trailing edge (210) of the wind turbine rotor blade (200).

2. Method of installing a wind turbine rotor blade (200), wherein
the holding unit (300) comprises a trailing edge protection (340), by means of which the clamping unit (320) can be fixed to the trailing edge (210) of the rotor blade (200),
wherein the clamping unit (320) is in the form of a hook, in particular of GRP.

3. Method of installing a wind turbine rotor blade, wherein
the holding unit (300) comprises a support overlay as protection for the surface of the rotor blade.

4. Method of installing a wind turbine rotor blade according to any one of the claims 1 to 3, wherein
the strap at least portion-wise has an anti-slip surface.

5. Method of installing a wind turbine rotor blade according to any one of the claims 1 to 4, wherein
the strap (310) has a first end (311) which can be clamped with the clamping unit (320) and a second end (312), to which a holding cable (400) can be fixed.

6. A holding unit (300) for installing a wind turbine rotor blade (200) comprising
at least one strap (310) which can be wound around a wind turbine rotor blade (200),
a clamping unit (320) adapted to fix an end of the strap (310) to a trailing edge (210) of the wind turbine rotor blade (200), and
a trailing edge protection (340), by means of which the clamping unit (320) can be fixed to the trailing edge (210) of the rotor blade (200),
wherein the clamping unit (320) is in the form of a hook, in particular of GRP.

7. A holding unit (300) according to claim 6 and further comprising a support overlay as protection for the surface of the rotor blade.

8. A holding unit (300) according to one of claims 6 and 7 wherein the strap at least portion-wise has an anti-slip surface.

9. A holding unit (300) according to one of claims 6 to 8 wherein
the strap (310) has a first end (311) which can be clamped with the clamping unit (320) and a second end (312), to which a holding cable (400) can be fixed.

10. A holding unit (300) according to one of claims 6 to 9 wherein
the clamping unit (320) is secured to prevent it from falling down by way of a securing cable.

## Revendications

1. Procédé de montage d'une pale de rotor d'éolienne (200), avec les étapes :
de fixation amovible d'une unité de maintien (300) à l'extérieur sur la pale de rotor d'éolienne en particulier sans prise avec une surface de la pale de rotor d'éolienne (200),
de fixation d'un câble de maintien sur l'unité de maintien (300),
de montage de la pale de rotor (200) sur un moyeu de l'éolienne (100), et
de desserrage de l'unité de maintien (300) par la rotation de la pale de rotor d'éolienne (200) autour d'un axe longitudinal de pale de rotor,
dans lequel l'unité de maintien (300) présente au moins une sangle (310), laquelle est enroulée au moins une fois autour de la pale de rotor d'éolienne (200) pour fixer l'unité de maintien (300) à l'extérieur sur la pale de rotor d'éolienne (200), et présente une unité de serrage (320), laquelle est configurée pour fixer une extrémité de la sangle (310) sur un bord de fuite (210) de la pale de rotor d'éolienne (200).

2. Procédé de montage d'une pale de rotor d'éolienne (200) selon la revendication 1,
dans lequel l'unité de maintien (300) présente une protection de bord de fuite (340), au moyen de laquelle l'unité de serrage (320) peut être fixée sur le bord de fuite (210) de la pale de rotor (200),
dans lequel l'unité de serrage (320) est configurée en tant qu'un crochet, en particulier en matière plastique renforcée par des fibres de verre.

3. Procédé de montage d'une pale de rotor d'éolienne (200) selon la revendication 2, dans lequel
l'unité de maintien (300) présente un enduit en tant que protection pour la surface de la pale de rotor.

4. Procédé de montage d'une pale de rotor d'éolienne (200) selon l'une quelconque des revendications 1 à 3, dans lequel
la sangle présente au moins par endroits une surface anti-glissement.

5. Procédé de montage d'une pale de rotor d'éolienne (200) selon l'une quelconque des revendications 1 à 4, dans lequel
la sangle (310) présente une première extrémité (311), laquelle peut être enserrée avec l'unité de serrage (320), et présente une seconde extrémité (312), sur laquelle un câble de maintien (400) peut être fixé.

6. Unité de maintien (300) destinée au montage d'une pale de rotor d'éolienne (200), avec au moins une sangle (310), laquelle peut être enroulée autour d'une pale de rotor d'éolienne (200),
une unité de serrage (320), laquelle est configurée pour fixer une extrémité de la sangle (310) sur un bord de fuite (210) de la pale de rotor d'éolienne (200), et
une protection de bord de fuite (340), au moyen de laquelle l'unité de serrage (320) peut être fixée sur le bord de fuite (210) de la pale de rotor (200),
dans laquelle l'unité de serrage (320) est configurée en tant qu'un crochet, en particulier en matière plastique renforcée par des fibres de verre.

7. Unité de maintien (300) selon la revendication 6, avec en outre
un enduit en tant que protection pour la surface de la pale de rotor.

8. Unité de maintien (300) selon l'une quelconque des revendications 6 à 7, dans laquelle
la sangle présente au moins par endroits une surface anti-glissement.

9. Unité de maintien (300) selon l'une quelconque des revendications 6 à 8, dans laquelle
la sangle (310) présente une première extrémité (311), laquelle peut être enserrée avec l'unité de serrage (320), et présente une seconde extrémité (312), sur laquelle un câble de maintien (400) peut être fixé.

10. Unité de maintien (300) selon l'une quelconque des revendications 6 à 9, dans laquelle
l'unité de serrage (320) est bloquée pour empêcher toute chute par l'intermédiaire d'un câble de blocage.
